# EUROPEAN PATENT APPLICATION

(11) **EP 2 961 139 A1**
(43) Date of publication of application: **30.12.2015**
(21) Application number: 15173187.4
(22) Date of filing: 22.06.2015
(51) Int. Cl.: H04M 1/57, H04M 3/42

(54) **DEVICE FOR DISPLAYING IDENTIFICATION INFORMATION ABOUT ANOTHER DEVICE AND METHOD THEREOF**

(30) Priority: 23.06.2014 KR 20140076271
(71) Applicant: Samsung Electronics Co., Ltd, Gyeonggi-do 443-742 (KR)
(72) Inventor: BAE, Jong Kyu, 402-837 Incheon (KR); PARK, Jae Hyun, 463-869 Gyeonggi-do (KR); PARK, Hey Young, 143-724 Seoul (KR); LEE, Ki Won, 446-750 Gyeonggi-do (KR); LIM, Ki Young, 446-882 Gyeonggi-do (KR); JANG, Woo Hyuk, 445-787 Gyeonggi-do (KR); JUNG, Han Seong, 100-450 Seoul (KR)
(74) Representative: Jenkins, Richard Gavin

(57) **Abstract**

A method for display, at a first electronic device, identification information about a second electronic device is provided. The method includes receiving a call or a message from the second electronic device, requesting identification information about the second electronic device to a server, receiving the requested identification information from the server, and displaying the received identification information on a screen. The identification information comprises relation information between the first electronic device and the second electronic device.

## Description

### TECHNICAL FIELD

The present disclosure relates to a device and a method capable of displaying identification information about another electronic device when receiving a message or call from the other electronic device.

### BACKGROUND

In recent years, network equipment has been installed all over the country according to development of information communication technologies. With an electronic device, a user may call another user or transmit/receive messages with the other user, using a network and the network equipment.

Also, when receiving a phone call or a message from the electronic device of the other user, an electronic device of the user may display a phone number of the electronic device of the other user. Accordingly, the user may identify the source of the phone call or message. Moreover, the user may determine whether to receive the phone call and whether to answer to the received message.

The above information is presented as background information only to assist with an understanding of the present disclosure. No determination has been made, and no assertion is made, as to whether any of the above might be applicable as prior art with regard to the present disclosure.

### SUMMARY

Various respective aspects and features of the invention are defined in the appended claims. Combinations of features from the dependent claims may be combined with features of the independent claims as appropriate and not merely as explicitly set out in the claims.

It is an aim of certain embodiments of the invention to solve, mitigate or obviate, at least partly, at least one of the problems and/or disadvantages associated with the prior art. Certain embodiments aim to provide at least one of the advantages described below.

Accordingly, embodiments provide an electronic device and a method capable of displaying identification information of other electronic device when a message or call is received from the other electronic device. In accordance with an embodiment, a method for display identification information about a second electronic device is provided. The method includes receiving a call or a message from the second electronic device, requesting the identification information about the second electronic device at a server, receiving the requested identification information from the server, and displaying the received identification information on a screen, wherein the identification information comprises relation information about the first electronic device.

In accordance with another embodiment, a first electronic device is provided. The first electronic device includes a contact receiving module configured to receive one of a call or a message from a second electronic device, a transmission module configured to request identification information about the second electronic device at a server, an information receiving module configured to receive the requested identification information from the server, and a display module configured to display the received identification information on a screen, wherein the identification information comprises relation information about the first electronic device.

In accordance with another embodiment, a server is provided. The server includes an information management module configured to manage information about a plurality of electronic devices including a first electronic device and a second electronic device, a processor configured to obtain identification information about the second electronic device, and a transmission module configured to transmit the obtained identification information about the second electronic device to the first electronic device, wherein the identification information comprises relation information about the first electronic device. Another aspect of the invention provides a computer program comprising instructions arranged, when executed, to implement a method in accordance with any one of the above-described aspects. A further aspect provides machine-readable storage storing such a program.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

Embodiments of the invention will now be described, by way of example only, with reference to the accompanying drawings in which:
FIG. 1 is a diagram illustrating a network environment of an electronic device according to various embodiments of the present disclosure;
FIG. 2 is a configuration diagram of an identification information display system according to various embodiments of the present disclosure;
FIG. 3 is a configuration diagram of a first electronic device according to various embodiments of the present disclosure;
FIG. 4 is a configuration diagram of an information management server according to various embodiments of the present disclosure;
FIG. 5 is a diagram illustrating a method for generating relation information between electronic devices based on telephone directory information according to various embodiments of the present disclosure;
FIG. 6 is a flow chart illustrating a method for displaying identification information of a second electronic device at a first electronic device according to various embodiments of the present disclosure;
FIG. 7 is a flow chart illustrating a method for displaying identification information of a second electronic device at a first electronic device according to an embodiment of the present disclosure;
FIG. 8 is a flow chart illustrating a method for searching for information of a second electronic device at an information management server according to various embodiments of the present disclosure;
FIG. 9 is a flow chart illustrating a method for searching for information of a second electronic device at an information management server according to an embodiment of the present disclosure;
FIG. 10 is a diagram illustrating identification information of a second electronic device displayed on a screen of a first electronic device according to various embodiments of the present disclosure; and
FIG. 11 is a block diagram illustrating an electronic device according to various embodiments of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein may be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The term "include," "comprise," "including," or "comprising" used herein indicates disclosed functions, operations, or existence of elements but does not exclude other functions, operations or elements. It should be further understood that the term "include", "comprise", "have", "including", "comprising", or "having" used herein specifies the presence of stated features, integers, operations, elements, components, or combinations thereof but does not preclude the presence or addition of one or more other features, integers, operations, elements, components, or combinations thereof.

The meaning of the term "or" or "at least one of A and/or B" used herein includes any combination of words listed together with the term. For example, the expression "A or B" or "at least one of A and/or B" may indicate A, B, or both A and B.

The terms, such as "first", "second", and the like used herein may refer to various elements of various embodiments of the present disclosure, but do not limit the elements. For example, such terms do not limit the order and/or priority of the elements. Furthermore, such terms may be used to distinguish one element from another element. For example, "a first user device" and "a second user device" indicate different user devices. For example, without departing the scope of the present disclosure, a first element may be referred to as a second element, and similarly, a second element may be referred to as a first element.

In the description below, when one part (or element, device, and the like) is referred to as being "connected" to another part (or element, device, and the like), it should be understood that the former may be "directly connected" to the latter, or "electrically connected" to the latter via an intervening part (or element, device, and the like). It will be further understood that when one component is referred to as being "directly connected" or "directly linked" to another component, it means that no intervening component is present.

Terms used in this specification are used to describe embodiments of the present disclosure and are not intended to limit the scope of the present disclosure. The terms of a singular form may include plural forms unless otherwise specified.

Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal sense unless expressly so defined herein in various embodiments of the present disclosure.

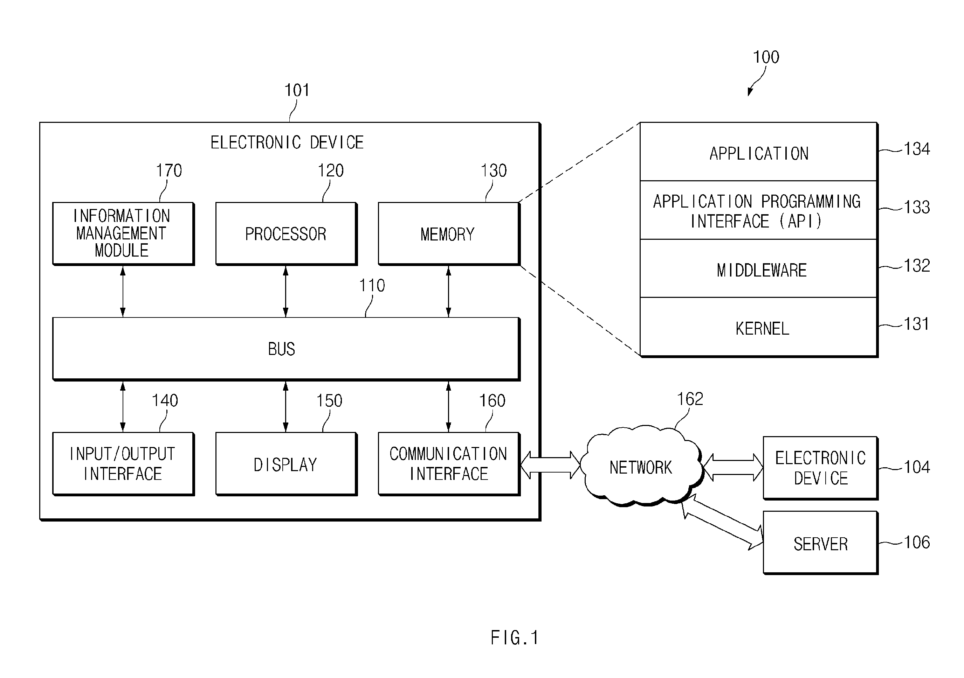

An electronic device according to various embodiments of the present disclosure may be a device for displaying identification information of another electronic device which will be described with reference to FIGS. 1 to 10. For example, electronic devices according to various embodiments of the present disclosure may include a metal case. For example, the electronic devices may include at least one of smartphones, tablet personal computers (PCs), mobile phones, video telephones, electronic book readers, desktop PCs, laptop PCs, netbook computers, personal digital assistants (PDAs), portable multimedia players (PMPs), Moving Picture Experts Group (MPEG-1 or MPEG-2) Audio Layer 3 (MP3) players, mobile medical devices, cameras, wearable devices (e.g., head-mounted-devices (HMDs), such as electronic glasses), an electronic apparel, electronic bracelets, electronic necklaces, electronic appcessories, electronic tattoos, smart watches, and the like.

According to various embodiments of the present disclosure, the electronic devices may be smart home appliances including metal cases. The smart home appliances may include at least one of, for example, televisions (TVs), digital versatile disc (DVD) players, audios, refrigerators, air conditioners, cleaners, ovens, microwave ovens, washing machines, air cleaners, set-top boxes, TV boxes (e.g., Samsung HomeSync™, Apple TV™, or Google TV™), game consoles, electronic dictionaries, electronic keys, camcorders, electronic picture frames, and the like.

According to various embodiments of the present disclosure, the electronic devices may include at least one of medical devices (e.g., a magnetic resonance angiography (MRA), a magnetic resonance imaging (MRI), a computed tomography (CT), scanners, and ultrasonic devices), navigation devices, global positioning system (GPS) receivers, event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller machines (ATMs), and points of sales (POSs) including metal cases.

According to various embodiments of the present disclosure, the electronic devices may include at least one of parts of furniture or buildings/structures having communication functions, electronic boards, electronic signature receiving devices, projectors, and measuring instruments (e.g., water meters, electricity meters, gas meters, and wave meters) including metal cases. The electronic devices according to various embodiments of the present disclosure may be one or more combinations of the above-mentioned devices. Furthermore, the electronic devices according to various embodiments of the present disclosure may be flexible devices. It would be obvious to those skilled in the art that the electronic devices according to various embodiments of the present disclosure are not limited to the above-mentioned devices.

Hereinafter, electronic devices according to various embodiments of the present disclosure will be described with reference to the accompanying drawings. The term "user" used herein may refer to a person who uses an electronic device or may refer to a device (e.g., an artificial electronic device) that uses an electronic device.

FIG. 1 is a diagram illustrating a network environment of an electronic device according to various embodiments of the present disclosure.

Referring to FIG. 1, an electronic device 101 may include a bus 110, a processor 120, a memory 130, an input/output (I/O) interface 140, a display 150, a communication interface 160, and an information management module 170.

The bus 110 may interconnect the above-described components and may be a circuit for conveying communications (e.g., a control message) among the above-described components.

The processor 120 may receive instructions from the above-described other components (e.g., the memory 130, the I/O interface 140, the display 150, the communication interface 160, the information management module 170 or the like) through the bus 110, may decode the received instructions, and may perform data processing or operations according to the decoded instructions.

The memory 130 may store instructions or data received from the processor 120 or other components (e.g., the I/O interface 140, the display 150, the communication interface 160, the information management module 170 or the like) or generated by the processor 120 or the other components. The memory 130 may include, for example, programming modules such as a kernel 131, a middleware 132, an application processing interface (API) 133, and an application 134. Each of the above-described programming modules may be implemented in the form of software, firmware, hardware, or a combination of at least two thereof.

The kernel 131 may control or manage system resources (e.g., the bus 110, the processor 120, the memory 130 or the like) that are used to execute operations or functions of remaining other programming modules, for example, the middleware 132, the API 133, or the application 134. Moreover, the kernel 131 may provide an interface that accesses discrete components of the electronic device 101 on the middleware 132, the API 133, or the application 134 to control or manage them.

The middleware 132 may perform a mediation role so that the API 133 or the application 134 communicates with the kernel 131 to exchange data. Moreover, with regard to task requests received from the application 134, for example, the middleware 132 may perform a control (e.g., scheduling or load balancing) on a task request using a method of assigning the priority, which makes it possible to use a system resource (e.g., the bus 110, the processor 120, the memory 130 or the like) of the electronic device 101, to the at least one application 134.

The API 133 may be an interface through which the application 134 controls a function provided by the kernel 131 or the middleware 132, and may include, for example, at least one interface or function (e.g., an instruction) for a file control, a window control, image processing, a character control or the like. According to various embodiments of the present disclosure, the application 134 may include a short messaging service (SMS)/multimedia messaging service (MMS) application, an e-mail application, a calendar application, an alarm application, a health care application (e.g., an application for measuring an exercise amount, a blood sugar or the like), an environment information application (e.g., an application for providing air pressure, humidity, temperature information or the like) or the like. Additionally or generally, the application 134 may be an application associated with information exchange between the electronic device 101 and an external electronic device (e.g., another electronic device 104). The application associated with information exchange may include, for example, a notification relay application for transmitting specific information to an external electronic device or a device management application for managing an external electronic device.

For example, the notification relay application may include a function for providing an external electronic device (e.g., the other electronic device 104) with notification information generated from another application (e.g., a message application, an e-mail application, a health care application, an environment information application or the like) of the electronic device 101. Additionally or generally, the notification relay application, for example, may receive notification information from an external electronic device (e.g., the other electronic device 104) and may provide the notification information to a user. Additionally or generally, the notification relay application, for example, may manage (e.g., install, delete, or update) a function (e.g., turn on/turn off of an external electronic device itself (or a portion of a constituent part) or control of brightness (or resolution) of a screen) of at least a portion of the external electronic device (e.g., the other electronic device 104) communicating with the electronic device 101, an application operating on the external electronic device, or a service (e.g., a communication (or telephone) service or a message service) provided by the external electronic device.

According to various embodiments of the present disclosure, the application 134 may include an application that is designated according to an attribute (e.g., the kind of electronic device) of the external electronic device (e.g., the other electronic device 104). For example, in the case where the external electronic device is an MP3 player, the application 134 may include an application associated with music reproduction. Similarly, in the case that the external electronic device is a mobile medical device, the application 134 may include an application associated with a health care. According to an embodiment of the present disclosure, the application 134 may include at least one of an application designated to the electronic device 101 or an application received from the external electronic device (e.g., the other electronic device 104 or a server 106).

The I/O interface 140 may transmit an instruction or data, input from a user through an I/O device (e.g., a sensor, a keyboard, or a touch screen), to the processor 120, the memory 130, the communication interface 160, or the information management module 170, for example, through the bus 110. For example, the I/O interface 140 may provide the processor 120 with user's touch data input through a touchscreen. Moreover, the I/O interface 140 may output an instruction or data, received from the processor 120, the memory 130, the communication interface 160, or the information management module 170 through the bus 110, through the I/O device (e.g., a speaker or the display 150). For example, the I/O interface 140 may output voice data processed through the processor 120 to the user through a speaker.

The display 150 may display a variety of information (e.g., multimedia data, text data or the like) for the user. For example, when the electronic device 101 receives a message or a call from the other electronic device 104, the display 150 may display identification information of the other electronic device 104.

The communication interface 160 may establish communication between the electronic device 101 and an external electronic device (e.g., the other electronic device 104 or a server 106). For example, the communication interface 160 may be connected to the network 162 through wireless communication or wired communication to communicate with the external electronic device. The wireless communication may include at least one of, for example, Wi-Fi, Bluetooth (BT), BT low energy (BLE), near field communication (NFC), GPS, cellular communication (e.g., 3^{rd} generation (3G), long tern evolution (LTE), LTE-advanced (LTE-A), code division multiple access (CDMA), wideband CDMA (WCDMA), universal mobile telecommunications system (UMTs), wireless broadband (WiBro), global system for mobile communications (GSM) or the like), and the like. The wired communication may include at least one of, for example, a universal serial bus (USB), a high definition multimedia interface (HDMI), a recommended standard-232 (RS-232), a plain old telephone service (POTS) or the like.

According to an embodiment of the present disclosure, the network 162 may be a telecommunications network. The telecommunications network may include at least one of a computer network, an Internet, an Internet of things, a telephone network, and the like. According to an embodiment of the present disclosure, a protocol (e.g., a transport layer protocol, a data link layer protocol, or a physical layer protocol) for communication between the electronic device 101 and an external device may be supported by at least one of the kernel 131, the middleware 132, the application programming interface 133, the application 134, or the communication interface 160.

The information management module 170 may process at least a portion of information obtained from other components (e.g., a processor 120, a memory 130, an I/O interface 140, a display 150, a communication interface 160 or the like) and may provide it to a user in various methods.

For example, the information management module 170 may manage information about the electronic device 101 and other electronic device (e.g., the other electronic device 104) using the processor 120 or independently of the processor 120.

As a preprocessing operation for displaying identification information of the other electronic device 104 on the display 150, the information management module 170 may search for identification information of the other electronic device 104. The identification information may include at least one of a phone number of the electronic device other 104 and profile information of a user of the other electronic device 104.

According to various embodiments of the present disclosure, the server 106 may provide support to drive the electronic device 101 by performing at least one of operations (or functions) implemented at the electronic device 101. For example, the server 106 may include an information management server module that may support the information management module 170 implemented at the electronic device 101. For example, the information management server module may include at least one component of the information management module 170 and may perform (e.g., stand in for) at least one of operations that the information management module 170 performs.

Hereinafter, there will be described an embodiment of the present disclosure where a server 106 is used as a component for managing information about the electronic device 101 and the other electronic device 104.

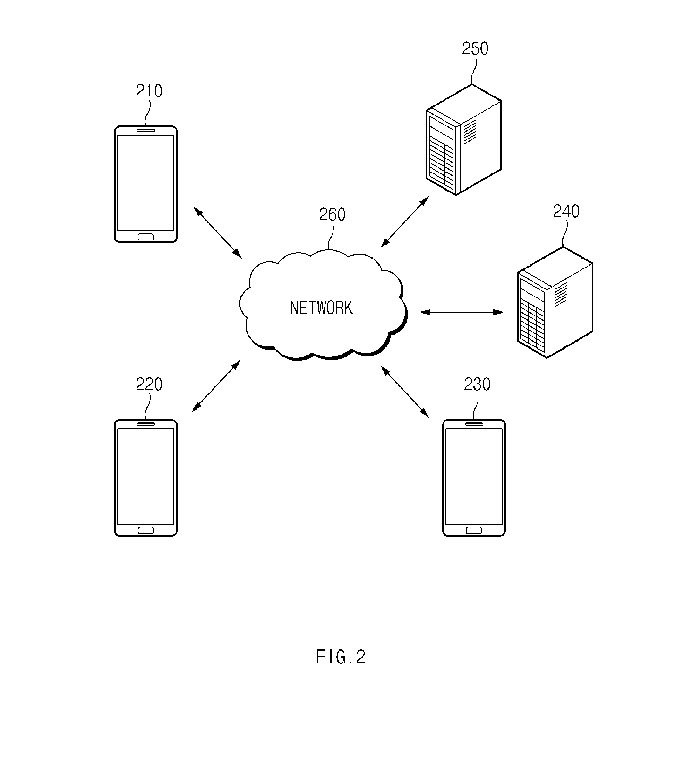

FIG. 2 is a configuration diagram of an identification information display system according to various embodiments of the present disclosure.

Referring to FIG. 2, an identification information display system may include a first electronic device 210, a second electronic device 220, a third electronic device 230, an information management server 240, a spam number management server 250, and a network 260. The identification information display system of FIG. 2 may be at least one of various embodiments of the present disclosure, and the present disclosure may not be limited to FIG. 2. For example, the information management server 240 and the spam number management server 250 may be implemented with one server.

The first electronic device 210 may receive a message (e.g., an SMS message, an MMS message, an instant message or the like) or a call from another electronic device (e.g., the second electronic device 220). Receiving of the call may include providing notification that the first electronic device 210 has an incoming call (is called backed), using silent, vibration, or bell sound. Moreover, the receiving of the call may include an operation where a user of the second electronic device 220 phones a user of the first electronic device 210.

When receiving a message or a call from the second electronic device 220, the first electronic device 210 may display identification information about the second electronic device 220 as the source of the message or the call.

The identification information about the second electronic device 220 may include relation information (e.g. relationship information or common connections information) with the first electronic device 210. For example, it may be assumed that a phone number of the third electronic device 230 is included in telephone directory of the first electronic device 210 and a phone number of the second electronic device 220 is included in telephone directory of the third electronic device 230. In this case, the identification information may indicate relation between the first electronic device 210 and the second electronic device 220 using the third electronic device 230 as a medium (connecting link between the first and second electronics devices via the first and third device contacts lists).

Moreover, the identification information may include at least one of the phone number of the second electronic device 220 and profile information about a user of the second electronic device 220.

The first electronic device 210 may transmit a request for identification information about the second electronic device 220 to the information management server 240 based on a message or a call received from the second electronic device 220.

According to various embodiments of the present disclosure, when the telephone directory (e.g. address book or contacts list) of the first electronic device 210 does not include the phone number of the second electronic device 220, the first electronic device 210 may transmit a request for identification information about the second electronic device 220 to the information management server 240.

Moreover, when the phone number of the second electronic device 220 is not a spam number, the first electronic device may request identification information about the second electronic device 220 to the information management server 240. Whether or not the phone number of the second electronic device 220 is a spam number may be determined by the spam number management server 250. Accordingly, before requesting identification information of the second electronic device 220 from the information management server 240, the first electronic device 210 may transmit the phone number of the second electronic device 220 to the spam number management server 250.

The second electronic device 220 may transmit a message or a call to the first electronic device 210. Even though the telephone directory of the first electronic device 210 does not include the phone number of the second electronic device 220, a phone number of the first electronic device 210 may be included in the telephone directory of the second electronic device 220.

The telephone directory of the third electronic device 230 may include phone numbers of the first electronic device 210 and the second electronic device 220. Similarly, the telephone directory of each of the first electronic device 210 and the second electronic device 220 may include a phone number of the third electronic device 230.

The information management server 240 may be a server managed by a telecommunications service provider (e.g., Verizon, AT&T, SKT, KT, LGT or the like). Alternatively, the information management server 240 may be a server managed by an electronic device manufacturer (e.g., Samsung Electronics Co. Ltd., LG Electronics Inc., Apple Inc., or the like).

The information management server 240 may store information about each of a plurality of electronic devices received from each of the plurality of electronic devices. Information about the electronic device may include telephone directory information (a contact list stored at a telephone directory; a buddy list) of the electronic device.

According to various embodiments of the present disclosure, if an operator of the information management server 240 is a telecommunications service provider, the information management server 240 may store information about electronic devices of users that employ a service of a relevant telecommunications service provider. Moreover, if an operator of the information management server 240 is an electronic device manufacturer, the information management server 240 may store information about electronic devices that a relevant manufacturer makes.

The information management server 240 may generate relation information between electronic devices using telephone directory information of each of the electronic devices.

The information management server 240 may retrieve or search for identification information about the second electronic device 220 from information stored at the information management server 240, based on an identification information request about the second electronic device 220 received from the first electronic device 210.

The information management server 240 may transmit the found identification information about the second electronic device 220 to the first electronic device 210. In the case where identification information about the second electronic device 220 does not exist in the information management server 240, the information management server 240 may notify the first electronic device 210 that identification information about the second electronic device 220 does not exist.

The information management server 240 may receive a feedback about the transmitted identification information from the first electronic device 210. The feedback, for example, may include whether the transmitted identification information is accurate or not. Moreover, in the case where the identification information is not accurate, the feedback may include information about the second electronic device 220 received from a user of the first electronic device 210.

Moreover, after providing notification that identification information does not exist, the information management server 240 may receive a feedback from the first electronic device 210. The feedback, for example, may include whether a phone number of the second electronic device 220 is a spam number. If the phone number of the second electronic device 220 is not a spam number, the feedback may include information input with respect to the second electronic device 220 by a user of the first electronic device 210 at the first electronic device 210.

In the case where the identification information is not accurate, the information management server 240 may store the information newly input with respect to the second electronic device 220, based on the feedback.

The information management server 240 may notify the spam number management server 250 of the feedback, based on a feedback indicating that the phone number of the second electronic device 220 is a spam number. Alternatively, the information management server 240 may store information newly input with respect to the second electronic device 220, based on a feedback indicating the phone number of the second electronic device 220 is not a spam number.

According to various embodiments of the present disclosure, even though the information management server 240 does not receive an identification information request about the second electronic device 220 from the first electronic device 210, the information management server 240 may search for identification information about the second electronic device 220. As described above, the information management server 240 may be a server managed by a telecommunications service provider (e.g., Verizon, AT&T, SKT, KT, LGT or the like). For example, the information management server 240 may be a server operated by a mobile switching center (MSC), an SMS center (SMSC), or an MMS center (MMSC). In this case, the information management server 240 may receive a call or a message to be transmitted to the first electronic device 210, from the second electronic device 220. For example, a call to be transmitted to the first electronic device 210 may be received by the MSC as a call request of which the receiving terminal is the first electronic device 210. Moreover, a message to be transmitted to the first electronic device 210 may be received by the SMSC or MMSC as SMS or MMS of which the receiving terminal is the first electronic device 210.

The information management server 240 may obtain a phone number of the second electronic device 220 from the received call or message of which the receiving terminal is the first electronic device 210. As described above, since storing information about electronic devices, the information management server 240 may determine whether the obtained phone number of the second electronic device 220 is included in the telephone directory of the first electronic device 210. Moreover, the information management server 240 may transmit a request for identifying whether the phone number of the second electronic device 220 is a phone number registered as a spam number, to the spam number management server 250. In addition, the information management server 240 may obtain relation information between the first electronic device 210 and the second electronic device 220 using information about electronic devices.

The information management server 240 may transmit, to the first electronic device 210, whether the phone number of the second electronic device 220 is included in the telephone directory information of the first electronic device 210, whether the phone number of the second electronic device 220 is a spam number, or relation information between the first electronic device 210 and the second electronic device 220.

The spam number management server 250 may store spam number information. The spam number management server 250 may receive the phone number of the second electronic device 220 from the first electronic device 210 and may determine whether the received phone number of the second electronic device 220 is a spam number or not. If the phone number of the second electronic device 220 is not a spam number, the spam number management server 250 may notify the first electronic device 210 of such meanings.

Also, the spam number management server 250 may receive notification indicating that the phone number of the second electronic device 220 is a spam number, from the information management server 240. In this case, the spam number management server 250 may register the phone number of the second electronic device 220 as a spam number.

The network 260 (e.g., a network 162 illustrated in FIG. 1) may connect each of the first electronic device 210, the second electronic device 220, the third electronic device 230, the information management server 240, and the spam number management server 250 that an identification information display system includes. At this time, the network 260 may include a connection structure that makes it possible to exchange information between nodes such as electronic devices and servers.

A service for displaying identification information may be provided through an application that is installed on the first electronic device 210. Here, the application may indicate an application program and may include, for example, an App being executed on the first electronic device 210.

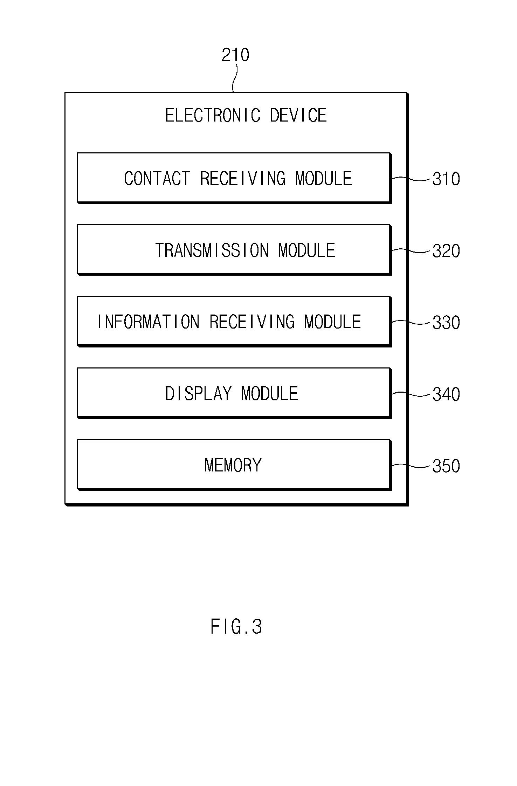

FIG. 3 is a configuration diagram of a first electronic device according to various embodiments of the present disclosure.

Referring to FIG. 3, a first electronic device 210 may include a contact receiving module 310, a transmission module 320, an information receiving module 330, a display module 340, and a memory 350. The first electronic device 210 illustrated in FIG. 3 may be at least one of various embodiments of the present disclosure. A change or modification on the first electronic device 210 may be variously made based on components illustrated in FIG. 3.

For example, the first electronic device 210 may further include a user interface for receiving any instruction or information from a user. In this case, the user interface may be an input device such as a keyboard, a mouse, and the like or a graphic user interface (GUI) expressed on a display device.

The contact receiving module 310 may receive a message or a call from the second electronic device 220. As described above, receiving of the call may include providing notification that the first electronic device 210 has an incoming call (or is called backed), using vibration or bell sound, and the like. Moreover, the receiving of the call may include an operation where a user of the second electronic device 220 phones a user of the first electronic device 210.

The transmission module 320 may request identification information about the second electronic device 220 to the information management server 240, based on a message or a call received by the contact receiving module 310.

The request about the identification information may be carried out if a phone number of the second electronic device 220 is not included in a telephone directory of the first electronic device 210. Also, the request about the identification information may be carried out if the phone number of the second electronic device 220 is not registered as a spam number. Whether the phone number of the second electronic device 220 is registered as a spam number may be determined by the spam number management server 250. For example, the transmission module 320 may send a request to the spam number management server 250 to determine whether the phone number of the second electronic device 220 is a spam number.

The transmission module 320 may transmit phone numbers of the first electronic device 210 and the second electronic device 220 to the information management server 240 together with the request. According to various embodiments of the present disclosure, the transmission module 320 may provide the information management server 240 with other identification information capable of identifying the first electronic device 210, for example, international mobile subscriber identity (IMSI), integrated circuit card identifier (ICCID), and the like, instead of (or in addition to) the phone number of the first electronic device 210.

The information receiving module 330 may receive identification information about the second electronic device 220 from the information management server 240. The identification information may be determined based on telephone directory information of the first electronic device 210 and telephone directory information of the second electronic device 220. The telephone directory information of the first electronic device 210 and the telephone directory information of the second electronic device 220 may include at least one common phone numbers. Moreover, the identification information may include the number of common phone numbers or information about at least one electronic device corresponding to the at least one common phone number.

For example, when the phone number of the second electronic device 220 is respectively registered at the first electronic device 210 and the third electronic device 230, the identification information may include information about the third electronic device 230. For example, the identification information about the second electronic device 220 may include relation information between the first electronic device 210 and the second electronic device 220 where the third electronic device 230 is used as a medium.

Similarly, when the phone number of the third electronic device 230 is registered at the first electronic device 210 and the phone number of the second electronic device 220 is registered at the third electronic device 230, the identification information about the second electronic device 220 may include relation information between the first electronic device 210 and the second electronic device 220 where the third electronic device 230 is used as a medium (e.g. common connection or link).

Moreover, the identification information may be determined based on the telephone directory information of the third electronic device 230 including the phone number of the first electronic device 210 and the phone number of the second electronic device 220. Even though the case where the phone number of the third electronic device is not registered at the first electronic device 210 or the second electronic device 220, the phone numbers of the first electronic device 210 and the second electronic device 220 may be registered at the third electronic device 230.

Moreover, the identification information may include identification information (e.g., user profile information) of a user of the second electronic device 220 as well as identification information of the second electronic device 220.

The display module 340 may display identification information about the second electronic device 220 received by an information receiving module 330 on a screen of the first electronic device 210. The identification information may be displayed within a range (e.g. information category or type) set by the second electronic device 220. For example, the identification information may be restricted by the second electronic device 220 such that only a name of the user profile information of the second electronic device 220 is displayed.

If not receiving identification information about the second electronic device 220 from the information management server 240, the display module 350 may display only a phone number of the second electronic device 220 on the screen. In this case, the display module 340 may display a feedback user interface (UI) for storing the phone number of the second electronic device 220 or registering the phone number of the second electronic device 220 as a spam number, on the screen.

According to a result through the feedback UI, a processor (not illustrated) (e.g., a processor 120 of FIG. 1) may store the phone number of the second electronic device 220 or register the phone number of the second electronic device 220 as a spam number. Moreover, at least a portion of the result through the feedback UI may be transmitted to the information management server 240 or the spam number management server 250 through the transmission module 320.

The memory 350 may store at least one pieces of data. At this time, data stored at the memory 350 may include data which is exchanged between internal components of the first electronic device 210 and data which is exchanged between the first electronic device 210 and external components of the first electronic device 210. For example, the memory 350 may store a plurality of phone numbers, and a variety of information received by the information receiving module 330 may be stored at the memory 350. Moreover, the memory 350 may store feedback information and the like set by the processor (not illustrated).

For example, the memory 350 may be implemented with a hard disk drive, a read only memory (ROM), a random access memory (RAM), a flash memory, a memory card, and the like existing inside or outside of the first electronic device 210.

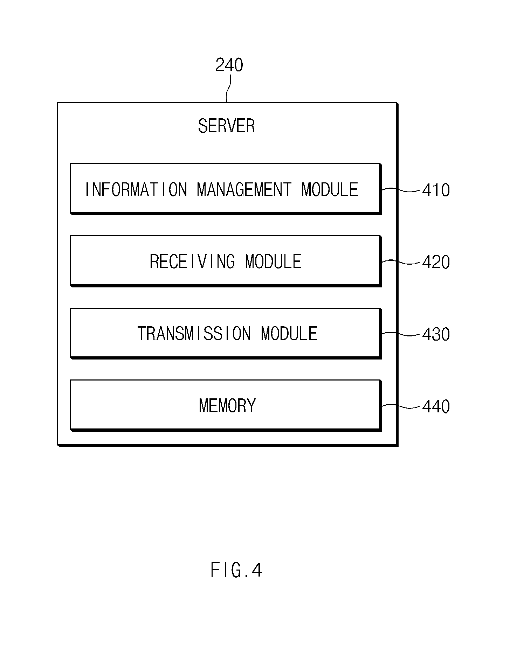

It may be well known to one skilled in the art that the contact receiving module 310, the transmission module 320, the information receiving module 330, the display module 340, and the memory 350 are implemented independently of each other or one or more thereof may be integrated. Moreover, operations being carried out by such components may be executed through a control of the processor. FIG. 4 is a configuration diagram of an information management server according to various embodiments of the present disclosure.

Referring to FIG. 4, the information management server 240 may include an information management module 410, a receiving module 420, a transmission module 430, and a memory 440. The information management server 240 may be at least one of various embodiments of the present disclosure and may be variously changed or modified based on components illustrated in FIG. 4.

As described with reference to FIG. 3, for example, the information management server 240 may further include a user interface for receiving any instruction or information from a user.

The information management server 410 may manage information about each of electronic devices including a first electronic device 210, a second electronic device 220, and a third electronic device 230. The information of each of the plurality of electronic devices may include identification information and telephone directory information of a relevant electronic device. Moreover, the information of each of the plurality of electronic devices may include profile information about a user of a relevant electronic device.

The information management module 410 may generate relation information between the plurality of electronic devices based on the telephone directory information of the plurality of electronic devices. For example, the information management module 410 may obtain phone numbers of a plurality of electronic devices included in a specific electronic device and may manage the information about each of the plurality of electronic devices by mapping each of the plurality of electronic devices onto the specific electronic device.

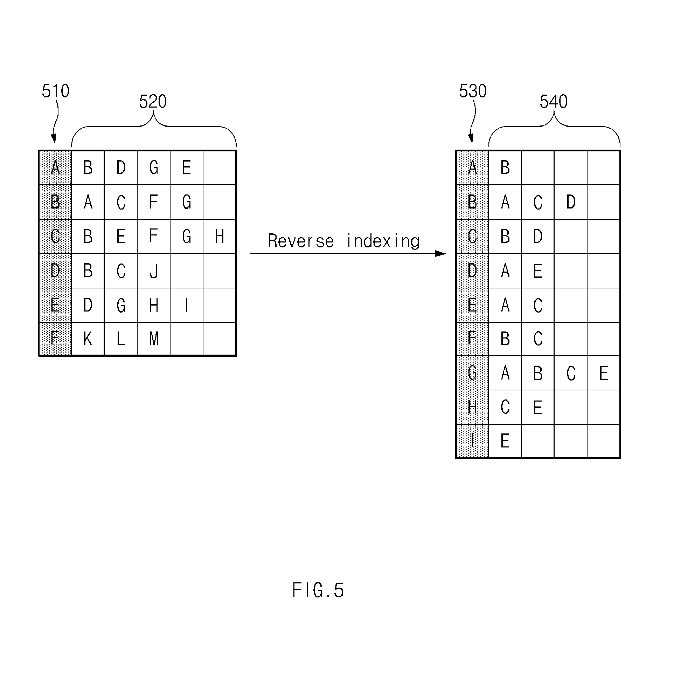

Hereinafter, an embodiment where the information management module 410 generates relation information between a plurality of electronic devices will be more fully described with reference to FIG. 5.

FIG. 5 is a diagram illustrating a method for generating relation information between a plurality of electronic devices based on telephone directory information according to various embodiments of the present disclosure.

Referring to FIG. 5, a left hand table may illustrate telephone directory information of a plurality of electronic devices drawn by a table. A first column 510 may indicate the plurality of electronic devices, respectively, and in the same row, remaining columns 520 may indicate telephone directory information stored at an electronic device corresponding to the first column 510. For example, a phone number of each of an electronic device B, an electronic device D, an electronic device E, and an electronic device G may be stored at an electronic device A. Similarly, a phone number of each of an electronic device A, an electronic device C, an electronic device F, and the electronic device G may be stored at the electronic device B.

A right hand table of FIG. 5 may be a result of performing reverse indexing with respect to the left hand table of FIG. 5. A first column 530 may indicate a plurality of electronic devices, and in the same row, remaining columns 540 may indicate other electronic devices storing telephone directory information of electronic devices in the first column 530. For example, the phone number of the electronic device A may be stored at the electronic device B. Similarly, the phone number of the electronic device B may be stored at the electronic device A, the electronic device C, and the electronic device D, respectively. Moreover, the phone number of the electronic device C may be stored at the electronic device B and the electronic device D, respectively.

When receiving a message or a call from the electronic device C, the electronic device A may transmit a request for identification information about the electronic device C to the information management server 240. The information management server 240 may use reverse indexing information about the electronic device A and the electronic device B (i.e., a first method). It may be understood from the right hand table of FIG. 5 that the electronic device B is included in common in the reverse indexing information about the electronic device A and the electronic device C. Accordingly, the information management server 240 may generate relation information about the electronic device A and the electronic device C where the electronic device B is used as a medium and may transmit the relation information to the electronic device A as at least a portion of the identification information.

According to various embodiments of the present disclosure, the information management server 240 may not employ the reverse indexing information to generate the relation information (second method). For example, according to the left hand table of FIG. 5, the information management server 240 may generate relation information about the electronic device A and the electronic device C where the electronic device B, the electronic device E, and the electronic device G included in common in the electronic device A and the electronic device C are used as a medium.

Since an electronic device where a phone number of the electronic device A is registered is different from an electronic device of which the phone number is registered at the electronic device A, according to the above-described two methods, different relation information may be generated. In the second method, incorrect relation information may be generated if a phone number of a public institution, a phone number of a restaurant, a phone number of a service center, and the like are stored in common at the electronic device A and the electronic device C. Accordingly, the first method based on the reverse indexing may be more efficient. Alternatively, the information management server 240 may employ the first method and the second method by duplication.

Returning to FIG. 4, the receiving module 420 may receive an identification information request about the second electronic device 220 from the first electronic device 210. The identification information request may include a phone number of the second electronic device 220. Moreover, the identification information request may include identification information of the first electronic device 210 or telephone directory information of the first electronic device 210.

Moreover, the receiving module 420 may receive information, in which a disclosure range of identification information about an electronic device is set, from the electronic device. For example, the receiving module 420 may receive a request of an electronic device that is set not to disclose the user image information of profile information thereof. The information management module 410 may determine a disclosure range of identification information based on the request of the electronic device. According to various embodiments of the present disclosure, the receiving module 420 may receive a call or a message, which the second electronic device 220 will transmit to the first electronic device 210, from the second electronic device 220. For example, if the information management server 240 is a server of a telecommunications service provider, such as an MSC, an SMSC, or an MMSC, the receiving module 420 may receive a call or a message of which the receiving terminal is the first electronic device 210, from the second electronic device 220. In this case, the call or the message may include a phone number of the second electronic device 220.

A processor (not shown) of the server may determine whether the phone number of the second electronic device 220 is included in the telephone directory information of the first electronic device 210, using information of a plurality of electronic devices. Moreover, the processor may transmit a request for identifying whether the phone number of the second electronic device 220 is a phone number registered as a spam number, to the spam number management server 250 through the transmission module 430. The transmission module 430 may transmit identification information about the second electronic device 220 to the first electronic device 210. In this case, the identification information about the second electronic device 220 may be obtained (or selected) by the processor. For example, the processor may retrieve or search for the identification information about the second electronic device 220, based on the received identification information request or the received call or message.

Moreover, the transmission module 430 may provide the first electronic device 210 with a result (a response from the spam number management server 250) indicating whether the phone number of the second electronic device 220 is included in the telephone directory information of the first electronic device 210 or whether the phone number of the second electronic device 220 is a phone number registered at a spam number.

If the identification information about the second electronic device 220 does not exist in the memory 440, the transmission module 430 may notify the first electronic device 210 that the identification information does not exist.

The receiving module 420 may receive, from the first electronic device 210, a feedback about the identification information transmitted to the first electronic device 210. If the feedback indicates that the identification information about the second electronic device 220 is incorrect, the information management server 410 may manage information about the second electronic device 220 separately. Moreover, if the memory 440 does not include identification information about the second electronic device 220, the receiving module 420 may receive a feedback about a phone number of the second electronic device 220 from the first electronic device 210. If the phone number of the second electronic device 220 is a spam number, the transmission module 430 may transmit the phone number of the second electronic device 220 to the spam number management server 250. Also, when the phone number of the second electronic device 220 is not a spam number, the information management module 410 may manage information about the second electronic device 220 separately.

If the feedback includes information newly input by the first electronic device 210 with respect to the second electronic device 220, the information management module 410 may store the newly input information together with information about the second electronic device 220.

The memory 440 may store at least one pieces of data by a processor. At this time, data stored at the memory 440 may include data which is exchanged between components placed inside of the information management server 240 and data which is exchanged between the information management server 240 and components placed outside of the information management server 240. For example, the memory 440 may store reverse indexing information generated by the information management module 410, relation information between electronic devices, and the like.

For example, the memory 440 may be implemented with a hard disk drive, a ROM, a RAM, a flash memory, a memory card, and the like existing inside or outside of the information management server 240.

There may be well known to one skilled in the art that the information management module 410, the receiving module 420, the transmission module 430, and the memory 440 are implemented independently of each other or one or more thereof are integrated. Moreover, operations being carried out by such components may be executed through a control of the processor.

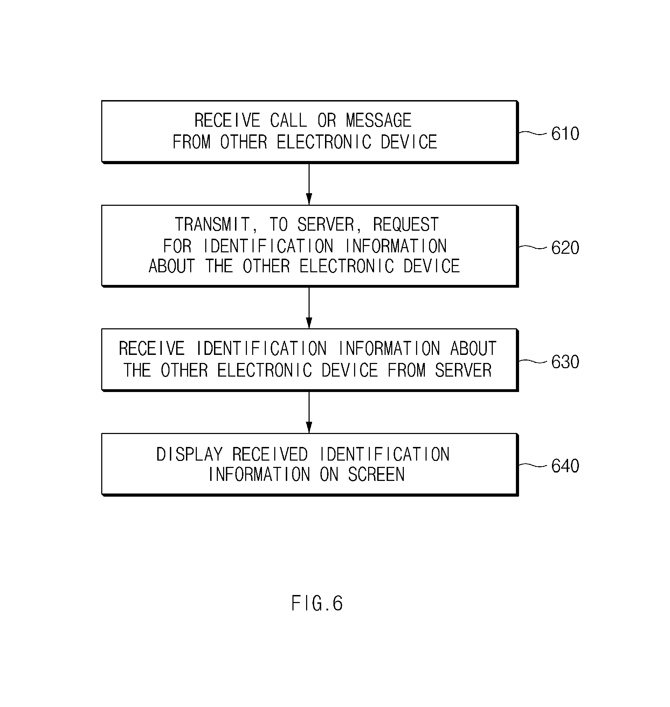

FIG. 6 is a flow chart illustrating a method for displaying identification information of a second electronic device at a first electronic device according to various embodiments of the present disclosure.

Referring to FIG. 6, a method for displaying identification information of the second electronic device 220 at the first electronic device 210 according to an embodiment of the present disclosure may include operations that are processed time-sequentially at the first electronic device 210, the second electronic device 220, the third electronic device 230, the information management server 240, and the spam number management server 250 illustrated in FIGS. 1 to 5. Accordingly, even though omitted below, contents described with respect to the first electronic device 210, the second electronic device 220, the third electronic device 230, the information management server 240, and the spam number management server 250 of FIGS. 1 to 5 may be applied to the method for displaying identification information of the second electronic device 220 at the first electronic device 210 according to an embodiment illustrated in FIG. 6.

In operation 610, the first electronic device 210 may receive a call or a message from the second electronic device 220.

In operation 620, the first electronic device 210 may transmit a request for identification information about the second electronic device 220 to the information management server 240.

In operation 630, the first electronic device 210 may receive identification information about the second electronic device 220 from the information management server 240.

In operation 640, the first electronic device 210 may display the identification information of the second electronic device 220 received in operation 630 on a screen.

A sequence of the above-described operations 610 to 640 illustrated in FIG. 6 may be only exemplary, not limited thereto. For example, a portion of the above-described operations may be performed at the same time.

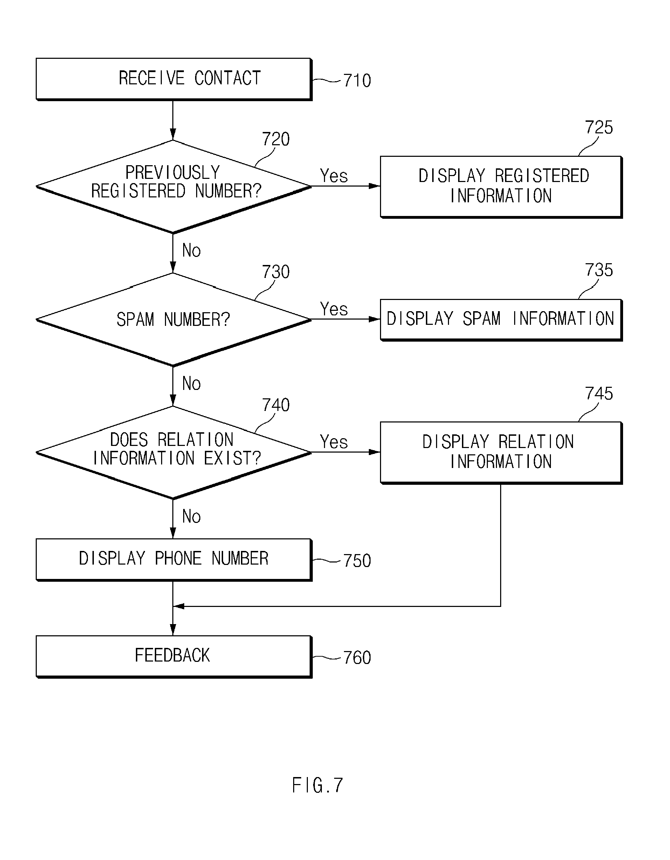

FIG. 7 is a flow chart illustrating a method for displaying identification information of a second electronic device at a first electronic device according to an embodiment of the present disclosure.

Referring to FIG. 7, a method for displaying identification information of the second electronic device 220 at the first electronic device 210 according to an embodiment of the present disclosure may include operations that are processed time-sequentially at the first electronic device 210, the second electronic device 220, the third electronic device 230, the information management server 240, and the spam number management server 250 illustrated in FIGS. 1 to 6. Accordingly, even though omitted below, contents described with respect to the first electronic device 210, the second electronic device 220, the third electronic device 230, the information management server 240, and the spam number management server 250 of FIGS. 1 to 6 may be applied to the method for displaying identification information of the second electronic device 220 at the first electronic device 210 according to an embodiment illustrated in FIG. 7.

In operation 710, the first electronic device 210 may receive a contact from the second electronic device 220. The contact may include a message or a call.

In operation 720, the first electronic device 210 may determine whether a phone number of the second electronic device 220 is registered at a telephone directory of the first electronic device 210.

As a consequence of determining that the phone number of the second electronic device 220 is registered at the telephone directory of the first electronic device 210, in operation 725, the first electronic device 210 may display information about the second electronic device 220 on a screen of the first electronic device 210.

As a consequence of determining that the phone number of the second electronic device 220 is not registered at the telephone directory of the first electronic device 210, in operation 730, the first electronic device 210 may determine whether the phone number of the second electronic device 220 is a spam number. At this time, whether the phone number of the second electronic device 220 is a spam number may be determined by the spam number management server 250.

When the phone number of the second electronic device 220 is a spam number, in operation 735, the first electronic device 210 may display that the phone number of the second electronic device 220 is a spam number, on a screen. Moreover, the first electronic device 210 may display information about the second electronic device 220 as spam information on the screen. The spam information may be received from the spam number management server 250.

When the phone number of the second electronic device 220 is not a spam number, in operation 740, the first electronic device 210 may determine whether relation information between the first electronic device 210 and the second electronic device 220 exists. Whether the relation information exists may be determined by the information management server 240.

As a consequence of determining that the relation information between the first electronic device 210 and the second electronic device 220 exists, in operation 745, the first electronic device 210 may receive the relation information from the information management server 240 and may display the received relation information on a screen.

As a consequence of determining that the relation information between the first electronic device 210 and the second electronic device 220 does not exist, in operation 750, the first electronic device 210 may display only the phone number of the second electronic device 220 as identification information about the second electronic device 220 on the screen.

In operation 760, the first electronic device 210 may provide feedback about the phone number of the second electronic device 220. If the relation information between the first electronic device 210 and the second electronic device 220 exists, the feedback may include information about accuracy of the relation information. Moreover, if the relation information between the first electronic device 210 and the second electronic device 220 does not exist, the feedback may include information about whether to store or not the phone number of the second electronic device 220, or whether to register or not the phone number of the second electronic device 220 as a spam number.

The feedback may be performed when the call received in operation 710 is terminated.

A sequence of the above-described operations 710 to 760 in FIG. 7 may be exemplary, not limited thereto. That is, a sequence between the operations may be changed or modified, and a portion of the above-described operations may be performed at the same time. When not managing a telephone directory, a user of the first electronic device 210 may not recognize the fact that a user of the second electronic device 220 stored at a telephone directory has changed. Assuming this condition, the first electronic device 210 may first determine whether the phone number of the second electronic device 220 is a spam number (operation 730). When the phone number of the second electronic device 220 is not a spam number, the first electronic device 210 may determine whether the phone number of the second electronic device 220 is included in a telephone directory of the first electronic device 210 (operation 720). Similarly, the first electronic device 210 may first identity relation information about the phone number of the second electronic device 220 (operation 730). When the relation information does not exist, the first electronic device 210 may determine whether the phone number of the second electronic device 220 is a phone number included in a telephone directory of the first electronic device 210 (operation 720). Even though the phone number of the second electronic device 220 is stored at the telephone directory of the first electronic device 210, operations 720 and 730 may be performed at the same time because the phone number of the second electronic device 220 is a spam number.

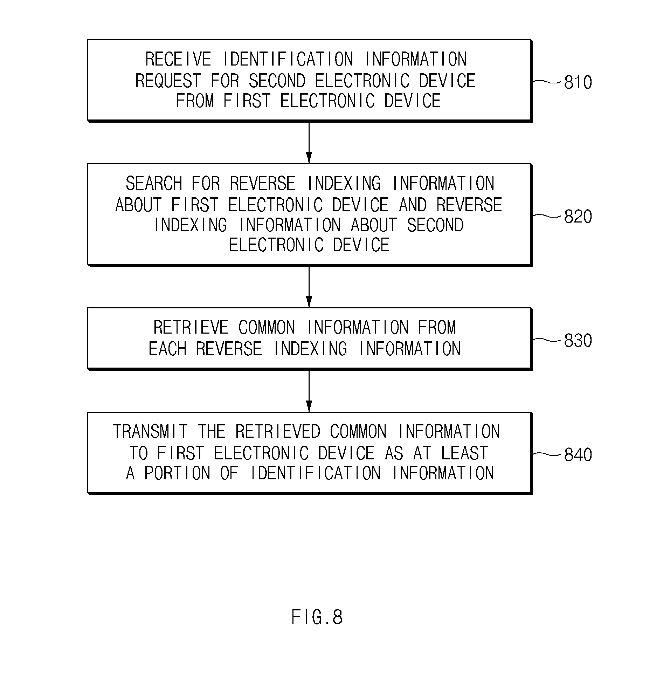

Moreover, at least a portion of the above-described operations may be omitted. It may be possible to omit operation 730 in which there is determined whether because the phone number of the second electronic device 220 is a spam number. The reason may be that when the spam number management server 250 is used to determine whether a relevant phone number is a spam number, in the middle of a telephone call from the second electronic device 220, the telephone is hung up due to a delay time for the determining. FIG. 8 is a flow chart illustrating a method for searching for information of a second electronic device at an information management server according to various embodiments of the present disclosure. Referring to FIG. 8, a method for searching for information of the second electronic device 220 at the information management server 240 according to an embodiment of the present disclosure may include operations that are processed time-sequentially at the first electronic device 210, the second electronic device 220, the third electronic device 230, the information management server 240, and the spam number management server 250 illustrated in FIGS. 1 to 7. Accordingly, even though omitted below, contents described with respect to the first electronic device 210, the second electronic device 220, the third electronic device 230, the information management server 240, and the spam number management server 250 of FIGS. 1 to 7 may be applied to the method for searching for information of the second electronic device 220 at the information management server 240 according to an embodiment illustrated in FIG. 8.

In operation 810, the information management server 240 may receive an identification information request for the second electronic device 220 from the first electronic device 210. Phone numbers of the first electronic device 210 and the second electronic device 220 may be included in the identification information request.

In operation 820, the information management server 240 may retrieve or search for reverse indexing information about the first electronic device 210 and the second electronic device 220. The reverse indexing information may be found using the phone numbers of the first electronic device 210 and the second electronic device 220 included in the identification information request.

In operation 830, the information management server 240 may retrieve or search for information included in common in the reverse indexing information about the first electronic device 210 and the reverse indexing information about the second electronic device 220.

In operation 840, the information management server 240 may transmit the common information found in operation 830 to the first electronic device 210 as at least a portion of identification information.

A sequence of the above-described operations 810 to 840 illustrated in FIG. 8 may be only exemplary, not limited thereto. For example, a portion of the above-described operations may be performed at the same time.

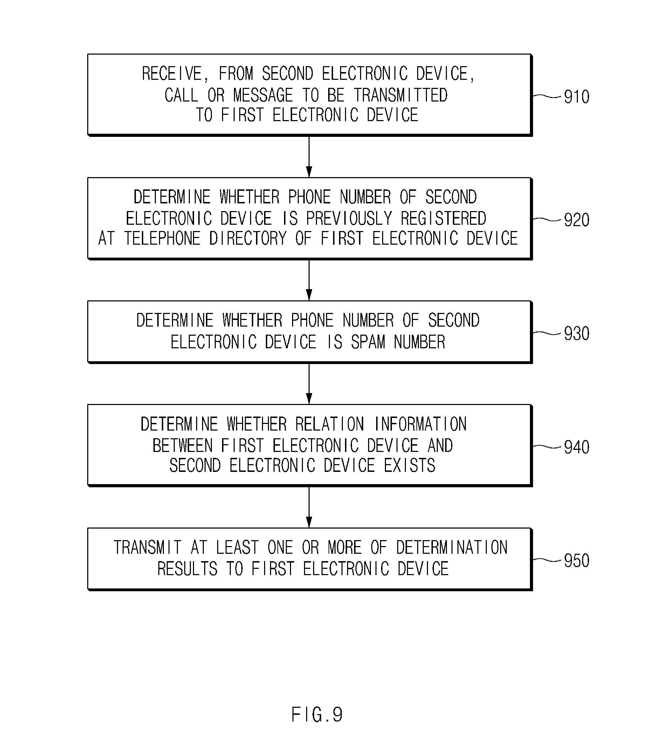

FIG. 9 is a flow chart illustrating a method for searching for information of a second electronic device at an information management server according to another embodiment of the present disclosure.

Referring to FIG. 9, a method for searching for information of the second electronic device 220 at the information management server 240 according to an embodiment of the present disclosure may include operations that are processed time-sequentially at the first electronic device 210, the second electronic device 220, the third electronic device 230, the information management server 240, and the spam number management server 250 illustrated in FIGS. 1 to 8. Accordingly, even though omitted below, contents described with respect to the first electronic device 210, the second electronic device 220, the third electronic device 230, the information management server 240, and the spam number management server 250 of FIGS. 1 to 8 may be applied to the method for searching for information of the second electronic device 220 at the information management server 240 according to an embodiment illustrated in FIG. 9.

In operation 910, the information management server 240 may receive a call or message to be transmitted to the first electronic device 210 from the second electronic device 220. The call or message may be a call or message that the second electronic device 220 transmits to the information management server 240 under the condition that the first electronic device 210 is set to a receiving terminal.

In operation 920, the information management server 240 may determine whether a phone number of the second electronic device 220 is a number previously registered at a telephone directory of the first electronic device 210.

In operation 930, the information management server 240 may determine whether the phone number of the second electronic device 220 is a phone number registered as a spam number. Whether the phone number of the second electronic device 220 is a phone number registered as a spam number may be determined by the spam number management server 250. For example, the information management server 240 may request the spam number management server 250 to identify whether the phone number of the second electronic device 220 is a phone number registered as a spam number. Moreover, the information management server 240 may determine whether the phone number of the second electronic device 220 is a phone number registered as a spam number, in response to an input of a result, indicating whether the phone number of the second electronic device 220 is a phone number registered as a spam number, from the spam number management server 250.

In operation 940, the information management server 240 may determine whether relation information between the first electronic device 210 and the second electronic device 220 exists.

In operation 950, the information management server 240 may provide the first electronic device 210 with at least one of determination results of operations 920, 930, and 940. The information management server 240 may provide the first electronic device 210 with all determination results of operations 920 to 940 about the phone number of the second electronic device 220. Otherwise, the information management server 240 may provide the first electronic device 210 with only a result, corresponding to the priority condition, from among the determination results. For example, when the phone number of the second electronic device 220 is a phone number registered as a spam, the determination results of operations 920 to 940 may not be transmitted to the first electronic device 210. Moreover, when relation information between the first electronic device 210 and the second electronic device 220 exists, the information management server 240 may not transmit the determination result of operation 920 to the first electronic device 210.

According to various embodiments of the present disclosure, when the phone number of the second electronic device 220 is a phone number registered as a spam, the information management server 240 may not transmit the call or message received in operation 910 to the first electronic device 210.

A sequence of the above-described operations 910 to 950 illustrated in FIG. 9 may be only exemplary, not limited thereto. That is, a sequence between the operations may be changed. For example, a sequence of the operations 920 to 940 may be changed, and a portion of the operations may be performed at the same time. Moreover, a portion of the above-described operations may be omitted. For example, whether the phone number of the second electronic device 220 is a number registered at a telephone directory of the first electronic device 210 may be determined by the first electronic device 210, so operation 920 may be omitted. Also, operations 920 and 940 may be omitted when a result of operation 920 indicates that the phone number of the second electronic device 220 is a phone number registered as a spam.

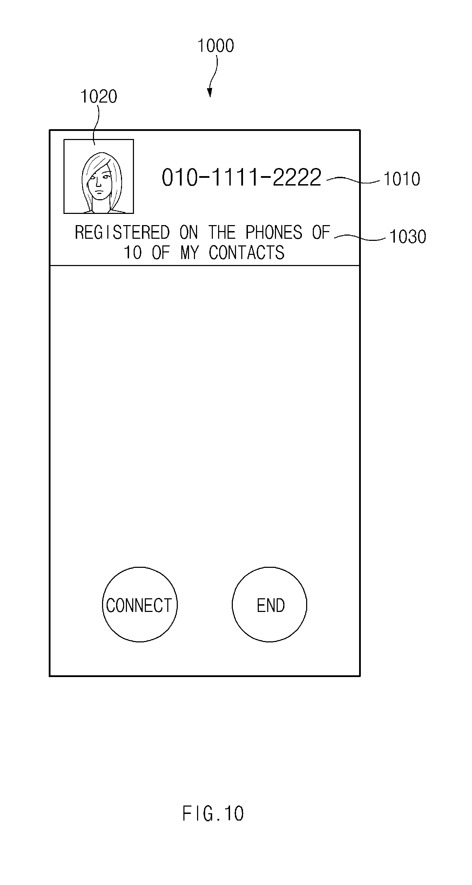

FIG. 10 is a diagram illustrating identification information of a second electronic device displayed on a screen of a first electronic device according to various embodiments of the present disclosure.

Referring to FIG. 10, identification information 1000 of the second electronic device 220 may include a phone number 1010 of the second electronic device 220, profile information 1020 of a user of the second electronic device 220, and relation information 1030 between the first electronic device 210 and the second electronic device 220.

The profile information 1020 about the user of the second electronic device 220, as illustrated in FIG. 10, may include an image of the user, and may further include a name, a nickname, a blood type, and the like of the user. Moreover, the profile information 1020 about the user of the second electronic device 220 may further include the following group information that the user belongs to: his/her alma mater, his/her department, and the like.

The relation information 1030 between the first electronic device 210 and the second electronic device 220, as illustrated in FIG. 10, may indicate the number of electronic devices that are used as a medium. Moreover, the relation information 1030 may include profile information of each of the electronic devices used as the medium. For example, the relation information 1030 may include information such as "Friend PAUL knows Number" and the like.

As described above, identification information about the second electronic device 220 may be displayed within a range restricted by the second electronic device 220. For example, user image information of the identification information about the second electronic device 220 may not be displayed. This operation may be accomplished by permitting the information management server 240 not to transmit the user image information to the first electronic device 210. Alternatively, this operation may be accomplished using a manner where the user image information is not displayed, even though the first electronic device 210 receives the user image information from the information management server 240.

A method for displaying identification information about a second electronic device may include receiving a call or a message from the second electronic device, requesting identification information about the second electronic device at a server, receiving the requested identification information from the server, and displaying the received identification information on a screen. At this time, the identification information comprises relation information about the first electronic device.

The identification information according to various embodiments of the present disclosure may be determined based on telephone directory information of the first electronic device and telephone directory information of the second electronic device. At this time, the telephone directory information of the first electronic device and the telephone directory information of the second electronic device may include at least one common phone number.

The identification information according to various embodiments of the present disclosure may include the number of the common phone numbers or information about an electronic device corresponding to the common phone number.

The identification information according to various embodiments of the present disclosure may include at least one of a phone number of the second electronic device and profile information about a user of the second electronic device.

The identification information according to various embodiments of the present disclosure may be displayed within a range set by the second electronic device.

The requesting of identification information according to various embodiments of the present disclosure may be performed when a phone number of the second electronic device is not included in the telephone directory information of the first electronic device. Moreover, the requesting of identification information may be performed when a phone number of the second electronic device is not registered as a spam number.

The method may further include displaying a phone number of the second electronic device on the screen when the requested identification information is not received from the server. In this case, the method may further include determining whether the phone number of the second electronic device is stored or whether the phone number of the second electronic device is registered as a spam.

The identification information according to various embodiments of the present disclosure concept may be determined based on telephone directory information of a third electronic device including a phone number of the first electronic device and a phone number of the second electronic device.

A first electronic device information according to various embodiments of the present disclosure may include a contact receiving module configured to receive a call or a message from a second electronic device, a transmission module configured to request identification information about the second electronic device at a server, an information receiving module configured to receive the requested identification information from the server, and a display module configured to display the received identification information on a screen. In this case, the identification information may include relation information about the first electronic device.

The electronic device according to various embodiments of the present disclosure may further include a phone number memory configured to store a plurality of phone numbers. In this case, at least one of the plurality of phone numbers may be stored at a phone number memory of the second electronic device.

A server according to various embodiments of the present disclosure may include an information management module configured to manage information about a plurality of electronic devices including a first electronic device and a second electronic device, a processor configured to obtain identification information about the second electronic device, and a transmission module configured to transmit the obtained identification information about the second electronic device to the first electronic device. Also, the identification information may include relation information about the first electronic device.

The information management module according to various embodiments of the present disclosure may generate relation information between the plurality of electronic devices based on telephone directory information of the plurality of electronic devices.

The information management module according to various embodiments of the present disclosure may obtain phone numbers of the plurality of electronic devices included in a specific electronic device and may map each of the plurality of electronic devices onto the specific electronic device for management. The server according to various embodiments of the present disclosure may further include a receiving module configured to receive an identification information request about the second electronic device from the first electronic device. The processor may search for identification information about the second electronic device based on the received identification information request. Also, the receiving module may receive a call or a message to be transmitted to the first electronic device from the second electronic device, and the processor may search for identification information about the second electronic device based on the received call or message.

The processor according to various embodiments of the present disclosure may determine whether a phone number of the second electronic device is included in telephone directory information of the first electronic device.

The transmission module according to various embodiments of the present disclosure may transmit a request for identifying whether a phone number of the second electronic device is a phone number registered as a spam, to a spam number management server.

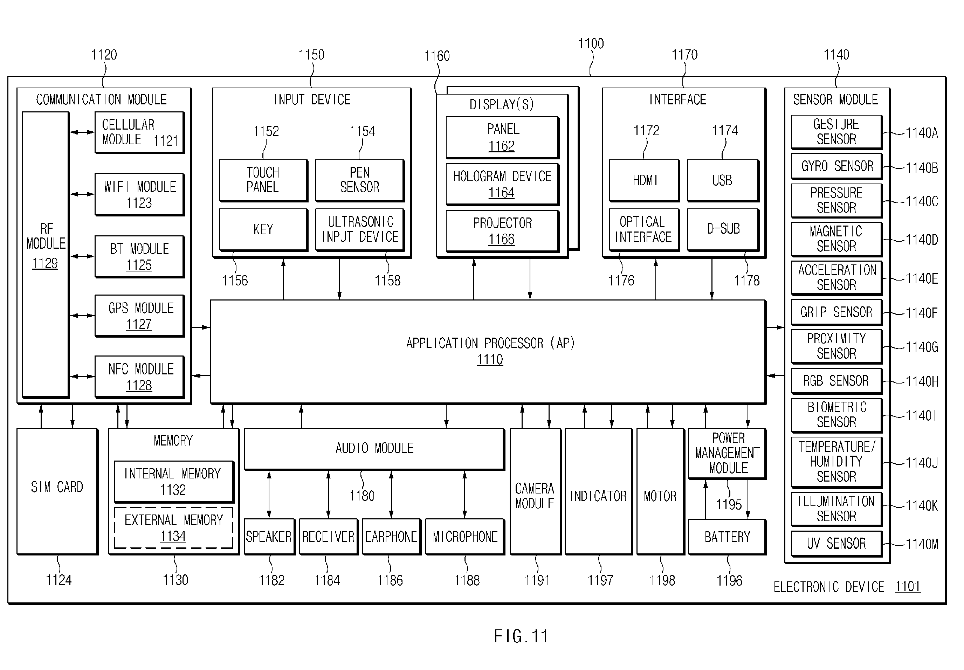

FIG. 11 is a block diagram illustrating an electronic device according to various embodiments of the present disclosure. The electronic device may include a part or all of components of an electronic device 101 shown in FIG. 1.

Referring to FIG. 11, an electronic device 1101 may include one or more application processors (AP) 1110, a communication module 1120, a subscriber identification module (SIM) card 1124, a memory 1130, a sensor module 1140, an input device 1150, a display 1160, an interface 1170, an audio module 1180, a camera module 1191, a power management module 1195, a battery 1196, an indicator 1197, and a motor 1198.

The AP 1110 may drive an operating system (OS) or an application to control a plurality of hardware or software components connected to the AP 1110 and may process and compute a variety of data including multimedia data. The AP 1110 may be implemented with a System on Chip (SoC), for example. According to an embodiment, the AP 1110 may further include a graphic processing unit (GPU) (not illustrated).

The communication module 1120 (e.g., the communication interface 160) may transmit and receive data when there are conveyed communications between other electronic devices (e.g., the other electronic device 104 or the server 106) connected with the electronic device 1101 (e.g., the electronic device 101) through a network. According to an embodiment of the present disclosure, the communication module 1120 may include a cellular module 1121, a Wi-Fi module 1123, a BT module 1125, a GPS module 1127, an NFC module 1128, and a radio frequency (RF) module 1129.

The cellular module 1121 may provide voice communication, video communication, a character service, an Internet service or the like through a communication network (e.g., an LTE, an LTE-A, a CDMA, a WCDMA, a UMTS, a WiBro, a GSM or the like). Also, the cellular module 1121 may perform discrimination and authentication of an electronic device within a communication network using a subscriber identification module (e.g., a SIM card 1124), for example. According to an embodiment, the cellular module 1121 may perform at least a portion of functions that the AP 1110 provides. For example, the cellular module 1121 may perform at least a portion of a multimedia control function.

According to an embodiment of the present disclosure, the cellular module 1121 may include a communication processor (CP). Also, the cellular module 1121 may be implemented with, for example, an SoC. Although components such as the cellular module 1121 (e.g., a CP), the memory 1130, the power management module 1195, and the like are illustrated as being components independent of the AP 1110, the AP 1110 may be implemented to include at least a portion (e.g., a cellular module 1121) of the above components.

According to an embodiment of the present disclosure, the AP 1110 or the cellular module 1121 (e.g., a communication processor) may load and process an instruction or data received from nonvolatile memories respectively connected thereto or from at least one of other elements at the nonvolatile memory. Also, the AP 1110 or the cellular module 1121 may store data received from at least one of other elements or generated by at least one of other elements at a nonvolatile memory.

Each of the Wi-Fi module 1123, the BT module 1125, the GPS module 1127, and the NFC module 1128 may include a processor for processing data exchanged through a corresponding module, for example. In FIG. 11, an embodiment of the present disclosure is exemplified as the cellular module 1121, the Wi-Fi module 1123, the BT module 1125, the GPS module 1127, and the NFC module 1128 are separate blocks, respectively. According to an embodiment of the present disclosure, at least a portion (e.g., two or more components) of the cellular module 1121, the Wi-Fi module 1123, the BT module 1125, the GPS module 1127, and the NFC module 1128 may be included within one IC or an IC package. For example, at least a portion (e.g., a communication processor corresponding to the cellular module 1121 and a Wi-Fi processor corresponding to the Wi-Fi module 1123) of communication processors corresponding to the cellular module 1121, the Wi-Fi module 1123, the BT module 1125, the GPS module 1127, and the NFC module 1128 may be implemented with one SoC.

The RF module 1129 may transmit and receive data, for example, an RF signal. Although not illustrated, the RF module 1129 may include a transceiver, a power amplifier module (PAM), a frequency filter, or low noise amplifier (LNA). Also, the RF module 1129 may further include the following part for transmitting and receiving an electromagnetic wave in a space in wireless communication: a conductor or a conducting wire. In FIG. 11, an embodiment of the present disclosure is exemplified as the cellular module 1121, the Wi-Fi module 1123, the BT module 1125, the GPS module 1127, and the NFC module 1128 are implemented to share one RF module 1129. According to an embodiment of the present disclosure, at least one of the cellular module 1121, the Wi-Fi module 1123, the BT module 1125, the GPS module 1127, or the NFC module 1128 may transmit and receive an RF signal through a separate RF module.

The SIM card 1124 may be a card that includes a SIM and may be inserted to a slot formed at a specific position of the electronic device. The SIM card 1124 may include unique identify information (e.g., ICCID) or subscriber information (e.g., IMSI).

The memory 1130 (e.g., the memory 130) may include an embedded memory 1132 or an external memory 1134. For example, the embedded memory 1132 may include at least one of a volatile memory (e.g., a dynamic RAM (DRAM), a static RAM (SRAM), or a synchronous DRAM (SDRAM)) and a nonvolatile memory (e.g., a one-time programmable ROM (OTPROM), a PROM, an erasable and programmable ROM (EPROM), an electrically erasable and programmable ROM (EEPROM), a mask ROM, a flash ROM, a NAND flash memory, or a NOR flash memory).

According to an embodiment of the present disclosure, the internal memory 1132 may be a solid state drive (SSD). The external memory 1134 may include a flash drive, for example, compact flash (CF), secure digital (SD), Micro-SD, Mini-SD, extreme digital (xD) or a memory stick. The external memory 1134 may be functionally connected to the electronic device 1100 through various interfaces. According to an embodiment of the present disclosure, the electronic device 1100 may further include a storage device (or a storage medium), such as a hard drive.

The sensor module 1140 may measure a physical quantity or may detect an operation state of the electronic device 1101. The sensor module 1140 may convert the measured or detected information to an electric signal. The sensor module 1140 may include at least one of a gesture sensor 1140A, a gyro sensor 1140B, a pressure sensor 1140C, a magnetic sensor 1140D, an acceleration sensor 1140E, a grip sensor 1140F, a proximity sensor 1140G, a color sensor 1140H (e.g., red, green, blue (RGB) sensor), a living body sensor 1140I, a temperature/humidity sensor 1140J, an illuminance sensor 1140K, or an ultraviolet (UV) sensor 1140M. Although not illustrated, additionally or generally, the sensor module 1140 may further include, for example, an E-nose sensor, an electromyography sensor (EMG) sensor, an electroencephalogram (EEG) sensor, an electrocardiogram (ECG) sensor, a photoplethysmographic (PPG) sensor, an infrared (IR) sensor, an iris sensor, a fingerprint sensor, and the like. The sensor module 1140 may further include a control circuit for controlling at least one sensors included therein.

The input device 1150 may include a touch panel 1152, a (digital) pen sensor 1154, a key 1156, or an ultrasonic input unit 1158. The touch panel 1152 may recognize a touch input using at least one of capacitive, resistive, infrared and ultrasonic detecting methods. Also, the touch panel 1152 may further include a control circuit. In the case of using the capacitive detecting method, a physical contact recognition or proximity recognition is allowed. The touch panel 1152 may further include a tactile layer. In this case, the touch panel 1152 may provide a tactile reaction to a user. The touch panel 1152 may generate a touch event associated with execution of a specific function using position associated information.

The (digital) pen sensor 1154 may be implemented in a similar or same manner as the method of receiving a touch input of a user or may be implemented using an additional sheet for recognition. The key 1156 may include, for example, a physical button, an optical key, a keypad, and the like. The ultrasonic input device 1158, which is an input device for generating an ultrasonic signal, may enable the electronic device 1101 to sense detect a sound wave through a microphone (e.g., a microphone 1188) so as to identify data, wherein the ultrasonic input device 1158 is capable of wireless recognition. According to an embodiment of the present disclosure, the electronic device 1101 may use the communication module 1120 so as to receive a user input from an external device (e.g., a computer or server) connected to the communication module 1120.

The display 1160 (e.g., a display 150) may include a panel 1162, a hologram device 1164, or a projector 1166. The panel 1162 may be, for example, flexible, transparent or wearable. The panel 1162 and the touch panel 1152 may be integrated into a single module. The hologram device 1164 may display a stereoscopic image in a space using a light interference phenomenon. The projector 1166 may project light onto a screen so as to display an image. The screen may be arranged in the inside or the outside of the electronic device 11 O1. According to an embodiment of the present disclosure, the display 1160 may further include a control circuit for controlling the panel 1162, the hologram device 1164, or the projector 1166.

The interface 1170 may include, for example, an HDMI 1172, a USB 1174, an optical interface 1176, or a D-subminiature (D-sub) 1178. The interface 1170 may be included, for example, in a communication interface 160 illustrated in FIG. 1. Additionally or generally, the interface 1170 may include, for example, a mobile high definition link (MHL) interface, an SD card/multi-media card (MMC) interface, or an infrared data association (IrDA) standard interface.

The audio module 1180 may convert a sound and an electric signal in dual directions. At least a portion of the audio module 1180, for example, may be included in an I/O interface 140 illustrated in FIG. 1. The audio module 1180 may process, for example, sound information that is input or output through a speaker 1182, a receiver 1184, an earphone 1186, or a microphone 1188.

According to an embodiment of the present disclosure, the camera module 1191 for shooting a still image or a video may include at least one image sensor (e.g., a front sensor or a rear sensor), a lens (not illustrated), an image signal processor (ISP, not illustrated), or a flash (e.g., a light emitting diode (LED) or a xenon lamp, not illustrated).

The power management module 1195 may manage power of the electronic device 1101. Although not illustrated, a power management IC (PMIC) a charger IC, or a battery or fuel gauge may be included in the power management module 1195.

The PMIC may be mounted on an integrated circuit or an SoC semiconductor. A charging method may be classified into a wired charging method and a wireless charging method. The charger IC may charge a battery, and may prevent an overvoltage or an overcurrent from being introduced from a charger. According to an embodiment of the present disclosure, the charger IC may include a charger IC for at least one of the wired charging method and the wireless charging method. The wireless charging method may include, for example, a magnetic resonance method, a magnetic induction method or an electromagnetic method, and may include an additional circuit, for example, a coil loop, a resonant circuit, or a rectifier, and the like.

The battery gauge may measure, for example, a remaining capacity of the battery 1196 and a voltage, current or temperature thereof while the battery is charged. The battery 1196 may store or generate electricity, and may supply power to the electronic device 1101 using the stored or generated electricity. The battery 1196 may include, for example, a rechargeable battery or a solar battery.

The indicator 1197 may display a specific state of the electronic device 1101 or a part thereof (e.g., the AP 1110), such as a booting state, a message state, a charging state, and the like. The motor 1198 may convert an electrical signal into a mechanical vibration. Although not illustrated, a processing device (e.g., a GPU) for supporting a mobile TV may be included in the electronic device 1101. The processing device for supporting a mobile TV may process media data according to the standards of digital multimedia broadcasting (DMB), digital video broadcasting (DVB) or media flow.

Each of the above-mentioned elements of the electronic device according to various embodiments of the present disclosure may be configured with one or more components, and the names of the elements may be changed according to the type of the electronic device. The electronic device according to various embodiments of the present disclosure may include at least one of the above-mentioned elements, and some elements may be omitted or other additional elements may be added. Furthermore, some of the elements of the electronic device according to various embodiments of the present disclosure may be combined with each other so as to form one entity, so that the functions of the elements may be performed in the same manner as before the combination.

The term "module" used herein may represent, for example, a unit including one or more combinations of hardware, software and firmware. The term "module" may be interchangeably used with the terms "unit", "logic", "logical block", "component" and "circuit". The "module" may be a minimum unit of an integrated component or may be a part thereof. The "module" may be a minimum unit for performing one or more functions or a part thereof. The "module" may be implemented mechanically or electronically. For example, the "module" according to various embodiments of the present disclosure may include at least one of an application-specific IC (ASIC) chip, a field-programmable gate array (FPGA), and a programmable-logic device for performing some operations, which are known or will be developed.

According to various embodiments of the present disclosure, at least a portion of an apparatus (e.g., modules or functions thereof) or a method (e.g., operations) according to various embodiments of the present disclosure, for example, may be implemented by instructions stored in a computer-readable storage media in the form of a programmable module. The instruction, when executed by one or more processors (e.g., the processor 120), may perform a function corresponding to the instruction. The computer-readable storage media, for example, may be the memory 130. At least a portion of the programming module, for example, may be implemented (e.g., executed) by the processor 120. At least a portion of the programming module may include the following for performing one or more functions: a module, a program, a routine, a set of instructions, or a process.

A computer-readable recording medium may include a hard disk, a magnetic media such as a floppy disk and a magnetic tape, an optical media such as compact disc ROM (CD-ROM) and a DVD, a magnetooptical media such as a floptical disk, and the following hardware devices specifically configured to store and perform a program instruction (e.g., a programming module): ROM, RAM, and a flash memory. Also, a program instruction may include not only a mechanical code such as things generated by a compiler but also a high-level language code executable on a computer using an interpreter. The above hardware unit may be configured to operate via one or more software modules for performing an operation of the present disclosure, and vice versa.

A module or a programming module according to an embodiment of the present disclosure may include at least one of the above elements, or a portion of the above elements may be omitted, or additional other elements may be further included. Operations performed by a module, a programming module, or other elements according to an embodiment of the present disclosure may be executed sequentially, in parallel, repeatedly, or in a heuristic method. Also, a portion of operations may be executed in different sequences, omitted, or other operations may be added.

According to various embodiments of the present disclosure, user convenience may be improved by displaying, on a screen of a first electronic device, identification information of a second electronic device as a source of a message or call received at the first electronic device.

While the present disclosure has been shown and described with reference to various embodiments thereof, it will be understood by those skilled in the art that various changes in form and details may be made therein without departing from the scope of the present disclosure as defined by the appended claims and their equivalents.

It will be appreciated that embodiments of the present invention can be realized in the form of hardware, software or a combination of hardware and software. Any such software may be stored in the form of volatile or non-volatile storage, for example a storage device like a ROM, whether erasable or rewritable or not, or in the form of memory, for example RAM, memory chips, device or integrated circuits or on an optically or magnetically readable medium, for example a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y

## Claims

1. A method for displaying, at a first electronic device, identification information about a second electronic device, the method comprising:
receiving (610) a call or a message from the second electronic device;
requesting (620) the identification information about the second electronic device to a server;
receiving (630) the requested identification information from the server; and
displaying (640) the received identification information on a screen,
wherein the identification information comprises relation information between the first electronic device and the second electronic device.

2. The method of claim 1,
wherein the identification information is determined based on telephone directory information of the first electronic device and telephone directory information of the second electronic device, and
wherein the telephone directory information of the first electronic device and the telephone directory information of the second electronic device comprise at least one common phone number or a phone number of the second electronic device is in telephone directory information of at least one electronic device corresponding to contacts of the first electronic device.

3. The method of claim 2, wherein the identification information comprises the number of the common phone numbers or information about an electronic device corresponding to each of the common phone numbers.

4. The method of any one of claims 1 to 3, wherein the identification information comprises at least one of a phone number of the second electronic device and profile information about a user of the second electronic device.

5. The method of any one of claims 1 to 4, wherein the requesting of identification information is performed if a phone number of the second electronic device is not included in the telephone directory information of the first electronic device and/or if a phone number of the second electronic device is not registered as a spam number.

6. The method of claim 5, further comprising:
transmitting a request for identifying whether the phone number of the second electronic device is registered as a spam number, to a spam number management server.

7. A first electronic device comprising:
a contact receiving module (310) configured to receive one of a call or a message from a second electronic device;
a transmission module (320) configured to request identification information about the second electronic device to a server;
an information receiving module (330) configured to receive the requested identification information from the server; and
a display module (340) configured to display the received identification information on a screen,
wherein the identification information comprises relation information between the first electronic device and the second electronic device.

8. The first electronic device of claim 7, further comprising:
a memory storing a plurality of phone numbers,
wherein at least one of the plurality of phone numbers is stored in a memory of the second electronic device.

9. A server comprising:
an information management module (410) configured to manage information about a plurality of electronic devices including a first electronic device and a second electronic device;
a processor configured to obtain identification information about the second electronic device; and
a transmission module (430) configured to transmit the obtained identification information about the second electronic device to the first electronic device,
wherein the identification information comprises relation information between the first electronic device and the second electronic device.

10. The server of claim 9, wherein the information management module is further configured to generate relation information between the plurality of electronic devices based on telephone directory information of the plurality of electronic devices.

11. The server of claim 10, wherein the managing of the information about the plurality of electronic devices is performed:
based on phone numbers of electronic devices included in telephone directory information of a specific electronic device. and
by mapping the specific electronic device onto each of the electronic devices.

12. The server of any one of claims 9 to 11, further comprising:
a receiving module configured to receive an identification information request about the second electronic device from the first electronic device,
wherein the processor is further configured to retrieve identification information about the second electronic device based on the received identification information request.

13. The server of any one of claims 9 to 12, further comprising:
a receiving module configured to receive one of a call or a message to be transmitted to the first electronic device from the second electronic device,
wherein the processor is further configured to retrieve identification information about the second electronic device based on the received one of the call or the message.

14. The server of any one of claims 9 to 13, wherein the processor is further configured to determine whether a phone number of the second electronic device is included in telephone directory information of the first electronic device.

15. The server of any one of claims 9 to 14, wherein the transmission module is further configured to transmit a request for identifying whether a phone number of the second electronic device is a phone number registered as a spam, to a spam number management server.
